Europäisches Patentamt

(19) European Patent Office

Office européen des brevets

(11) Publication number: **0 151 907**
**A2**

## (12) EUROPEAN PATENT APPLICATION

(21) Application number: **84850325.6**

(22) Date of filing: **25.10.84**

(51) Int. Cl.⁴: **B 60 R 9/04**

(30) Priority: **25.10.83 SE 8305871**

(43) Date of publication of application:
**21.08.85 Bulletin 85/34**

(84) Designated Contracting States:
**AT BE CH DE FR GB IT LI NL**

(71) Applicant: **Industri AB Thule**
**Box 69**
**S-330 33 Hillerstorp(SE)**

(72) Inventor: **Hielm, Odd**
**Backgatan 16**
**S-310 31 Eldsberga(SE)**

(72) Inventor: **Vahlberg, Christer**
**Plöjargränd 57**
**S-263 00 Höganäs(SE)**

(74) Representative: **Linde, Leif**
**Vernamo Patentbyrä AB P.O. Box 1**
**S-270 11 Abbekas(SE)**

(54) A lockable load carrier for a roof of a car.

(57) The object of the invention is a luggage carrier of the car roof rack type, the luggage carrier consisting of an extendable beam, which is constituted by two telescopically in relation to each other displacable, pipe shaped portions (1a, 1b) and which has a support leg (2a, 2b) at each end. The invention is characterized in that a clamp for fastening the support leg to a rain gutter or a corresponding projection at the corresponding side of a car roof is constituted a first and a second shank (3-4 and 5', respectively), of which the first shank is positioned inside the support leg and extends out through an opening in the support leg with an end portion formed as a hook (4) and extends with its opposite end into the beam and is connected with a block (6; 16) displacable in the beam, while the other shank of the clamp is constituted by an outer (lower) end portion (5') of the support leg. The two blocks (6; 16) of the beam are displacable in the direction against and away from each other by means of an elongated bolt (8) positioned in the beam and extending in the longitudinal direction thereof. One end of the bolt is accessible through an open beam end for a tool for rotating the bolt, by means of which the two beam portions are displacable in relation to each other and the two blocks are displacable in the direction towards and away from each other while moving said first shanks (4) with them for fastening the two clamps against and around the rain gutters. In order to prevent theft the open beam end through which the bolt is accessible is connected by means of a cup in the form of a flap rotatably connected with the beam, the flap being lockable to the corresponding support leg (2a) by means of a lock (21) which is lockable by means of a key (20).

FIG.1

The present invention relates to a luggage carrier of the kind defined in claim 1.

Luggage carriers of the type, which is usually called "a roof rack", usually consists of a U-shaped beam or rod having a web portion which extends transversely above the car roof at a greater or smaller height in relation thereto and having two legs supported by the car roof and provided with devices for clamping against two parallel projecting body or roof portions of the car, usually the rain gutters extending along the sides of the car roof. It is also previously known to arrange the web so that it is telescopically extendable in order to adapt the luggage carrier with regard to the width of the roof. In certain cases the U-shaped portion of the luggage carrier is reinforced by means of a transverse rod extending in parallel with the web of the U-shaped portion in the free space between this and the car roof. According to the German patent specification 2 551 646 there is used a threaded reinforcement element extending through the legs of the U-shaped portion and outside the leg support releasable gripping means for engagement with projections at the longitudinal sides of the car roof, said gripping means being clampable by means of a wheel on the threaded reinforcement rod. An advantage of the construction according to the German patent specification 2 551 646 is that the gripping means being designed as hooks can be clamped by means of one single element in the form of a nut designed as a wheel positioned at the outer side of one of the gripping means. A disadvantage is that the reinforcement and clamping rod extends through the support leg at a distance from and below the web of the U-shaped portion, which requires relatively high support legs and a great height above the roof for the beam. In this previously known construction the support leg at each end of the beam is terminated by a foot fixed to the support leg and engaging the upper surface of the roof which makes it necessary to extend the gripping means past the foot for gripping around the roof projection. In this embodiment the luggage carrier can be adapted to different roof widths only by using gripping means of different lengths and/or shape.

A similar construction is known from the Swedish patent specification 8100438-4. A further disadvantage of these known constructions is the difficulties with regard to the locking of the luggage carrier so that the carrier cannot be unauthorized removed from the roof.

The US patent specification 4 101 061 describes a U-shaped luggage carrier in which the clamping rod constitutes a portion of or extends through the transverse beam and allows an extension and reduction thereof for the clamping of gripping hooks below roof projections beside support feet which are connected with the ends of the support legs. The support legs are displacable against and from each other for clamping the gripping hooks by means of a crank mechanism engaging the threaded rod. A very characteristic feature of this known embodiment is that the mechanism for providing the reduction or extension and the clamping is complicated and expensive and sensible to disturbances.

All these know constructions also have the common drawback that the clamping mechanism does not allow a simple, thief-proof locking in the position on the car roof.

However, from for example the Swedish patent specifications 7415303-2, 7503423-1 and 8000115-9 it is previously known in luggage carriers to lock the clamping means of the luggage carriers in engagement with rain gutters by means of locking devices. However, these known constructions are relatively complicated and construction weakening, and the constructions are also supported in positions very exposed to wet and corrosion in connections with the reain gutters.

The object of the invention is to obviate the above drawbacks and provide a luggage carrier having a simple and rigid construction in which all vital portions are well protected and which allows a thief-proof locking by means of a compact locking device arranged in a protected position. These objects have been complied with by the fact that the luggage carrier according to the invention has been provided with the features defined in claim 1 and in preferred embodiments the features defined in claims 2-9.

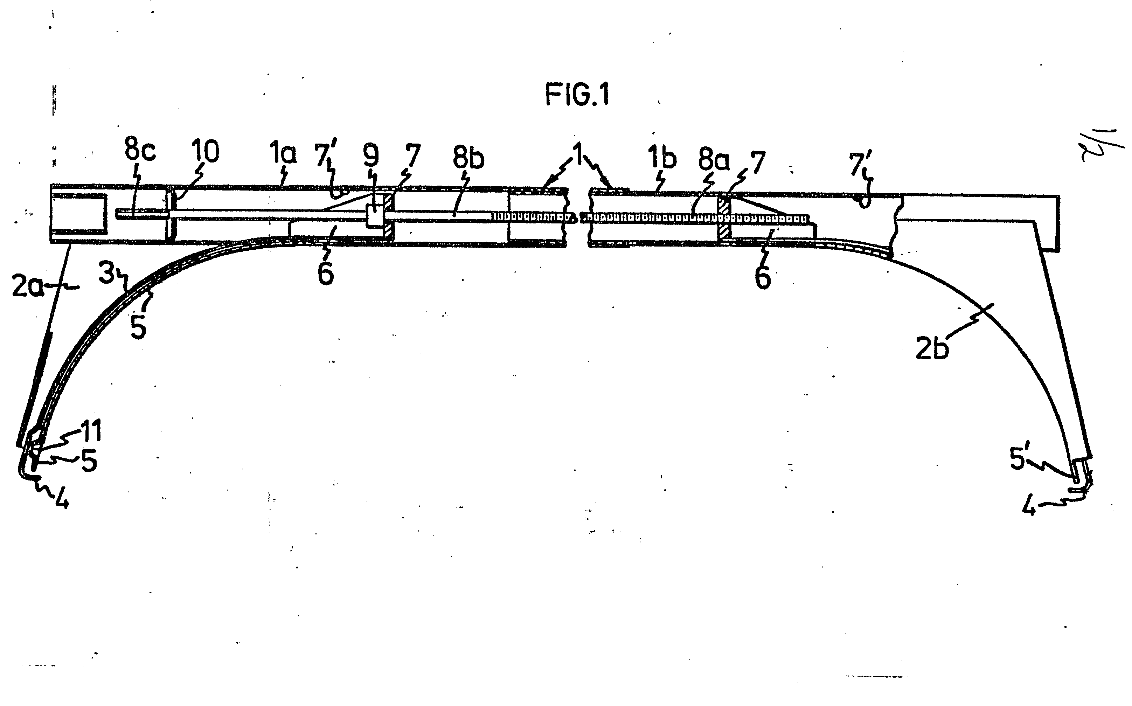

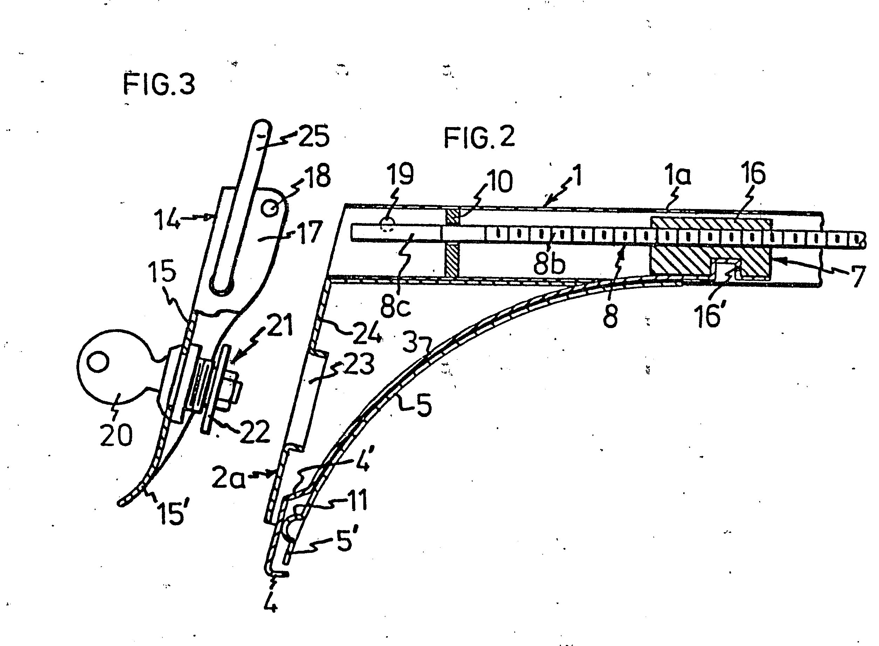

The invention is described in the following with reference to the accompanying drawings, in which fig. 1 is a longitudinal sectional view of a preferred embodiment of a luggage carrier according to the invention, fig. 2 shows a modification of the embodiment of fig. 1 and fig. 3 shows in side view and partly in section a locking device which is adapted to be rotatably connected with the end portion of the luggage carrier shown in fig. 2 and in its mounted position allows a thief-proof locking of the luggage carrier and at the same time a locking of an object, for example a surfing board, on the luggage carrier.

The luggage carrier shown in fig. 1 substantially has the shape of an elongated joke, the web portion thereof consisting of a beam which is formed by two pipe shaped portions 1a, 1b, which are telescopically displacable in relation to each other. At the outer end portion of each pipe portion 1a, 1b there is attached a support leg 2a, 2b. The support legs are hollow and each encloses an element 3 displacable in the support leg and having an end portion extending out from an opening in the lower end of the support leg constituting one of two in relation to each other displacable shanks of a fastening clamp the other shank of which is constituted by an end portion 5' of the support leg 5. The projecting end portion of the shank 3 has the shape of a hook 4 for engaging the lower side of a rain gutter (not shown), and the lower end portion 5' of the inner wall 5 of the support leg, which constitutes the other shank of the clamp, is adapted for supporting and engagement with the bottom of the rain gutter.

The wall 5 and the element 3 are both of substantially circular curvature parallel with each other. The element 3 extends into the corresponding pipe portion 1a and 1b, respectively, and is connected with a bracket 6 which is displacably guided in the pipe portion 1a and 1b, respectively, and is provided with a transverse wall 7. One of the bracket walls 7 and more precisely the left bracket wall of fig. 1 is provided with a through opening and the other bracket wall 7 is provided with a threaded opening for a tensioning bolt 8 which extends through the main portion of the joke web formed by the two telescopically displacable pipe portions 1a, 1b. The right half 8a of the tensioning bolt, as shown in fig. 1 is threaded and engages the threaded opening in the right bracket wall 7 while the left half 8b of the tensioning bolt has a round section with the exception of the outer end portion 8b which has for example hexagon shape to be engaged by a wrench. At the left half 8b of the tensioning bolt 8 there is provided a stop ring 9 for engaging the corresponding bracket wall 7. Between the two bolt portions 8b, 8c there is provided a suitable guiding washer for guiding the tensioning bolt in the corresponding pipe portion 1a, which is open at its right end for making the hexagonal end portion 8c of the tensioning bolt accessible.

By rotating the tensioning bolt in the one or the other direction the pipe 1a, 1b can be elongated or contracted. After adapting the luggage carrier to the car roof in question, that is so that the two support legs are standing with their lower ends of their opposite walls 5 against the bottoms of two rain gutters, the adaption of the luggage carrier has been conducted. By tightening the tensioning bolt 8 the two bracket walls 7 are then displaced somewhat in the direction against each other, whereby the two shanks 3 are displaced in relation to the support legs, so that they are displaced upwardly from a position somewhat more extended than shown in fig. 1, so that the hooks 4 are tightened against the lower surfaces of the rain gutters and the support legs are concurrently forced downwards, so that the shanks 5' are forced against the

bottoms of the rain gutters.

The modified and as a matter of fact preferred embodiment shown in fig. 2 differs from the embodiment described above and shown in fig. 1 by the fact that the locking tongue 3 and the bracket 6 which are firmly connected with each other are exchanged for a locking tongue 13 and a displacable driving block 16 which are releasably connected in an engagement at 16'. Of the two blocks 16 (only one is shown in fig. 2) one can have a left threaded and the other can have a right threaded opening for a tensioning bolt 8 provided as a rigging screw in which case the stop or the shoulder 9 of fig. 1 is disposed of. In both embodiments the displacable shank 3-4 extends into the corresponding square pipe 1a, 1b through an opening in the bottom of the square pipe. The support legs 2a, 2b enclose preferably at all sides the two shanks 3-4 with the exception of the necessary passages for their end portions. The end portions 4 of the shanks 3-4 formed as hooks can have the same design as according to fig. 1.

In order to provide sufficient motional play and reduction of the friction between the shank 3-4 and the inner wall 5 of the support leg it is in both embodiments possible to provide the lower edge portion of said wall 5 with an inwardly bent ridge 11 retaining the shank 3-4 at a small distance from the wall 5 and constituting a reinforcement of the wall 5 at the lower end 5' thereof. As shown, the ridge 11 engages a substantially C-shaped, bent end portion of the locking tongue, said end portion constituting the hook 4. When the clamp shank 3 is displaced in relation to the clamp shank 5 in the one direction the clamp is opened due to the fact the ridge 11 in cooperating with a shoulder at the transition of the hook 4 into the rest of the clamp shank 3 forces the hook outwards against the action of a spring force automatically closing the clamp during relative displacement in the opposite direction. In order to provide the spring action there can be used a spring (not shown) acting between the two shanks of the clamp, but in the preferred embodiment shown the shank per se is resilient so that there is not required any separate spring.

As appears above it is possible to adapt the beam portions 1a, 1b to different car roof widths by the fact that they are telescopically displacable in relation to each other, and it is easily realized that the two support legs by means of the bolt 8 easily can be fine adjusted for the roof width in question and that the clamps can be opened and closed by the displacement of one of the shanks 3-4 of the clamp in question by means of the bolt 8 in relation to the other shank 5 of the clamp.

In fig. 1 there is shown at 7' stops supported at the inner side of the beam portions 1a, 1b for restricting the outwardly directed motion of the two elements 7. Such stops can be provided also in the embodiment of fig. 2.

In fig. 3 there is shown a locking device generally provided with reference numeral 14 for thief-proof locking of the luggage carrier according to the invention to a car roof. The locking device comprises a flap 15 having at least at its upper portion a substantially U-shaped section, the side walls of the flap forming two lugs 17 which are adapted to overlap at opposite sides the one, left end portion according to fig. 2 of the square pipe 1a and an adjacent portion of the cover 2a. The lugs 17 and the pipe 1a are provided with through openings 18 and 19, respectively, which are positioned so that the locking flap 15 can be rotatably connected with the pipe 1a by means of for example a rivet (not shown).

At its lower end portion the flap 15 supports a lock generally provided with reference numerals 21, which is lockable by means of a key and comprises a lock bolt 22 adapted to engage a recess 23 for the lock bolt in the outer wall 24 of the cover 2a.

At its lower end the locking flap 15 has a lug 15' constituting a handle for raising the locking flap after unlocking the lock.

When the locking flap is rotated to engagement with the end of the luggage carrier and the lock is closed, the end of the pipe portion 1a is securely closed by the upper portion 15 of the locking flap so that the tensioning bolt is not accessible.

As shown in fig. 3 the locking flap can be provided with a tensioning joke 25 for securing an object, for example a surf-board, supported by the luggage carrier at the same time as the locking flap is rotated to its locking position and the lock 21 is locked by means of the key 20.

Also the embodiment shown in fig. 1 can, of course, be provided with the useful and efficient thief-proof and moisture protecting device according to the invention.

1. A luggage carrier adapted to be positioned on a vehicle roof and consisting of an extendable profile beam (1) which is constituted by two portions (1a, 1b) and at each end is connected with a support leg (2a, 2b) which has a device (3, 4, 5', 5-9) for fastening the support leg in question to a rain gutter or corresponding projection at the one and the other side of the roof with the beam supported by the support legs (2a, 2b) above and extending transversely of the roof, an elongated bolt (8) being positioned inside the beam for connecting the two portions of the beam with each other, the bolt having a threaded portion engaging a threaded opening in a first element (7; 16) in the one beam portion and a device (for example 9) for such engagement with against a second element (7; 16) in the other beam portion (1a) that the two portions (1a, 1b) are displacable and adjustable in relation to each other by means of the bolt (8), c h a r a c t e r i z e d in that the fastening device (3, 4, 5', 5-9) for each support leg (2a, 2b) comprises a clamp consisting of a pair of clamp shanks (3-4, 5') which are displacably positioned in relation to each other for clamping engagement around the rain gutter or the lug, that one shank (5') of each clamp is connected with the other shank (4-5) and displacable in relation to the corresponding support leg, that the shanks (3-4) which are displacable in relation to the corresponding support legs of the clamps are connected with said first and said second element (7; 16) of the beam and that these two elements are displacably positioned in the corresponding beam portion (1a, 1b) by means of the bolt (8) towards and away from each other in the longitudinal direction of the beam and are adapted thereby to provide displacement of the displacable shanks (3-4) of the two clamps in relation to the shanks (5') connected with the corresponding support leg for fastening and locking the two shanks (3-4; 5') of each clamp to the corresponding rain gutter or the like.

2. A luggage carrier according to claim 1, c h a r a c t e r i z e d in that the two beam portions (1a, 1b) are pipe shaped and telescopically displacable in relation to each other, that the elements (16) displacable in the two pipe portions (1a, 1b) have the form of blocks provided with openings, at least one of the openings being threaded for threaded engagement with the bolt (8), and that each block (16) is releasably connected with the displacable shank (3-4) of the corresponding clamp in a preferably shape fitted engagment (at 10).

3. A luggage carrier as claimed in claim 1 or 2, c h a r a c t e r i z e d

in that each support leg (2a, 2b) has the form of a cover shaped hollow body which is connected with the corresponding beam portion (1a, 1b) that the displacable shank (3-4) of the corresponding clamp is at a central portion (3) positioned inside the hollow support leg and extends with its rear end portion through an opening in the corresponding beam portion into engagement with the element (7; 16) displacable in this beam portion and extends with its opposite, outer end portion (4) out through an opening in the outer end of the support leg, that each of the opposite sides of the two support legs has substantially the shape of a circular curved wall (5), that the shank portion (3) of the corresponding clamp, which is displacable in the support leg has a corresponding, substantially circular curved shape and extends in parallel with the circular, curved wall, that the end portion of the circular, curved wall (5) forms at the outer end of the support leg the shank (5') of the clamp connected with the support leg for support against the bottom of the rain gutter and that the end portion (4) of the displacable shank (3-4) is curved to the shape of a hook for gripping around the rain gutter and engagement with the lower side of the rain gutter.

4.   A luggage carrier according to any of the preceding claims, c h a r a c t e r i z e d in that the bolt (8) has at at least one end a profiled portion (8c) which is accessible through an opening in the corresponding end of the beam in order to allow engagement with a suitable tool for rotating the bolt and that said opening in the end of the beam is closable by means of a cap consisting of a flap (15) rotatably connected with the beam and that the corresponding support leg (2a) has a recess (23) for a lock bolt of a lock (21) lockable by means of a key (20) and supported by the flap (15) opposite to said recess (23).

5.   A luggage carrier according to claim 4, c h a r a c t e r i z e d in that the flap (15) supports a joke (25) adapted as a luggage fastening element or ring for luggage tying, the joke being adapted to admit fastening of the goods by rotating the flap inwardly against the corresponding support leg 2a to the locking position of the lock (21).

6.   A luggage carrier as claimed in claim 4 or 5, c h a r a c t e r i z e d in that the flap (15) in its closed and locked position closes the opening in the beam end, so that access to the profiled portion (8a) of the bolt is prevented, as well as closes the recess (23) in the support leg for the lock bolt, and that the flap (15) has side walls (17) engaging in the closed position of the flap corresponding side portions of the support leg and the

0151907

beam end so that the entrance of moisture is prevented to a substantial degree.

7.    A luggage carrier according to any of the preceding claims; c h a r a c t e r i z e d  in that said opposite end portion of the bolt (8) extends with clearance through said other element (7) but has a shoulder (9) for engagement of at least one outer side of this other element (7).

8.    A luggage carrier as claimed in any of claims 1-6, c h a r a c t e r i z e d in that the two opposite end portions of the bolt are right and left threaded, respectively, and engage with rigging engagement threaded openings in said first and second element (7; 16), respectively.

9.    A luggage carrier as claimed in any of claims 3-8, c h a r a c t e r i z e d in that the two shanks of each clamp have guiding elements (4', 11) at its outer end portions, adapted for such engagement witb each other that the guide element (4') of the displacable shank (3-4) at displacement in one direction opens the corresponding clamp by engagement with the guide element of the other shank against the action of a spring force, for example by spring action of one of the shanks, so that the clamp is automatically closed when the displacable shank (3-4) is displaced in the opposite direction.

FIG.1

0151907

FIG.2

FIG.3